# EUROPEAN PATENT APPLICATION

(11) **EP 2 042 758 A2**
(43) Date of publication of application: **01.04.2009**
(21) Application number: 08016922.0
(22) Date of filing: 25.09.2008
(51) Int. Cl.: F16C 19/55, F16C 33/58

(54) **Rolling bearing device and turbocharger incorporating same**

(30) Priority: 25.09.2007 JP 2007247790
(71) Applicant: JTEKT Corporation, Osaka-shi Osaka 542-8502 (JP)
(72) Inventor: Ueno, Hiroshi, Osaka-shi Osaka 542-8502 (JP)
(74) Representative: Görz, Ingo

(57) **Abstract**

A rolling bearing device (32) includes a bearing housing (61) supported on a casing (40) of a turbocharger, and a pair of rolling bearings (10a,10b) mounted within the bearing housing and rotatably supporting a turbine shaft (41). A middle position between the pair of rolling bearings in an axial direction and a central portion of the bearing housing in the axial direction are offset from each other in the axial direction. Each of the rolling bearings includes an inner ring (1), an outer ring (3), an intermediate ring (2) interposed between the inner and outer rings, a row of rolling elements (4) rollably interposed between the inner ring and the intermediate ring, and a row of rolling elements (5) rollably interposed between the intermediate ring and the outer ring. The intermediate ring has a damper function to be very slightly displaced or very slightly deformed elastically so as to damp vibration produced during rotation of the turbine shaft.

## Description

### BACKGROUND OF THE INVENTION

### 1. Field of the Invention

This invention relates to a rolling bearing device and a turbocharger incorporating the same.

### 2. Related Art

Turbochargers have been extensively used in automobiles in order to enhance an engine performance. JP-A-2002-98158 discloses a turbocharger comprising a casing, a turbine shaft rotatably supported within the casing through a pair of rolling bearings, a turbine wheel fixed to one end of the turbine shaft, and a compressor wheel fixed to the other end of the turbine shaft. The pair of rolling bearings are spaced from each other in an axial direction, and are mounted on an inner peripheral surface of a bearing housing of a tubular shape. The bearing housing is supported in a central hole formed in the casing.

In the turbocharger of JP-A-2002-98158, in order to reduce vibration due to high-speed rotation of the turbine shaft, engine oil is supplied to an area between the outer peripheral surface of the bearing housing and the inner peripheral surface of the central hole of the casing to form an oil film, and an oil film damper is formed by this oil film. Engine oil passing past the oil film damper is supplied to each rolling bearing, thereby effecting the lubrication and cooling of the rolling bearing.

The turbine wheel fixed to the one end of the turbine shaft is located in an exhaust passageway through which hot (high temperature) exhaust gas flows, and therefore the temperature of the vicinities of this turbine wheel becomes very high. Therefore, that rolling bearing (the turbine wheel-side one of the pair of rolling bearings) which is disposed close to the turbine wheel is particularly affected by heat, and problems such as seizure and lowered durability are liable to arise.

In the turbocharger of JP-A-2002-98158, engine oil passing past the oil film damper is first supplied to the turbine wheel-side rolling bearing, and then this lubricating oil is supplied to the other rolling bearing, and by doing so, a cooling ability of the turbine wheel-side rolling bearing is enhanced. However, a larger amount of engine oil must be supplied to the turbine wheel-side rolling bearing in order to sufficiently cool it, and a driving power of an engine oil pump need to be increased, and therefore an energy loss of the engine becomes large.

On the other hand, it maybe proposed to locate the rolling bearings in sufficiently spaced relation to the turbine wheel in order to reduce adverse effects of heat from the turbine wheel. However, when the rolling bearings are merely spaced apart from the turbine wheel, the support balance between the turbine wheel and the compressor wheel is destroyed, so that vibration due to the rotation of the turbine shaft becomes extremely large.

Incidentally, for forming an oil film damper by engine oil and for effecting the lubrication and cooling of a rolling bearing by the engine oil as in the turbocharger of JP-A-2002-98158, many passages (holes) for the engine oil must be formed in the casing of the turbocharger. And besides, foreign matters such as carbon sludge and others are contained in engine oil, and therefore a filter or the like need to be provided in the passage to remove such foreign matters. Therefore, the casing and so on are complicated in structure, which invites a problem that the production cost increases. Furthermore, engine oil is gradually deteriorated when it is used, and therefore there is encountered a problem that the performance of the oil film damper is also lowered by this deterioration. In recent years, it has been desired to provide a turbocharger capable of solving these problems.

### SUMMARY OF THE INVENTION

It is an object of this invention to provide a rolling bearing device which can be used, for example, in a turbocharger, and can suitably suppress vibration of a turbine shaft even when rolling bearings are located in sufficiently spaced relation to a turbine wheel so as to reduce adverse effects of heat from the turbine wheel. Another object is to provide a turbocharger incorporating this rolling bearing device.

A further object is to provide a rolling bearing device which can suitably reduce the vibration of a turbine shaft without using engine oil. A further object is to provide a turbocharger incorporating this rolling bearing device.

According to the present invention, there is provided a rolling bearing device comprising a bearing housing adapted to be supported on a casing of an apparatus having a rotation shaft, and a pair of rolling bearings adapted to be mounted within the bearing housing to rotatably support the rotation shaft;
wherein a middle position between the pair of rolling bearings in an axial direction and a central portion of the bearing housing in the axial direction are offset from each other in the axial direction; and
each of the rolling bearings includes an inner ring having a first raceway formed at an outer periphery thereof, an outer ring having a second raceway formed at an inner periphery thereof, and at least one intermediate ring which is interposed between the inner and outer rings, and has a third raceway formed at an inner periphery thereof and also has a fourth raceway formed at an outer periphery thereof, a row of rolling elements rollably interposed between the third raceway of the intermediate ring and the first raceway of the inner ring, and a row of rolling elements rollably interposed between the fourth raceway of the intermediate ring and the second raceway of the outer ring; and
the intermediate ring has a damper function to be very slightly displaced or very slightly deformed elastically so as to damp vibration produced during rotation of the rotation shaft.

When the rolling bearing device of the above construction is to be used, for example, in a turbocharger (apparatus) having a rotation shaft (turbine shaft), the bearing housing is supported on the casing of the turbocharger, and is located at or near to a middle position between a turbine wheel and a compressor wheel. Then, the pair of rolling bearings are located in such a manner that the middle position between the pair of rolling bearings is offset from the central portion of the bearing housing toward the compressor wheel in the axial direction, and the turbine shaft (rotation shaft) is rotatably supported by the pair of rolling bearings. With this arrangement, the pair of rolling bearings are sufficiently spaced apart from the turbine wheel, and are less liable to be affected by heat from the turbine wheel.

When the pair of rolling bearings are thus sufficiently spaced apart from the turbine wheel, the support position for the turbine shaft is shifted in the axial direction, so that the support balance between the turbine wheel and the compressor wheel is liable to be destroyed. In the present invention, however, the intermediate ring has the damper function to be very slightly displaced or very slightly deformed elastically so as to damp vibration produced during rotation of the rotation shaft, and therefore vibration which tends to develop when the pair of rolling bearings are sufficiently spaced from the turbine wheel can be suppressed.

Therefore, in the invention, a temperature rise of the pair of rolling bearings can be suppressed without the need for supplying a large amount of lubricating oil thereto, and at the same time the vibration of the turbine shaft can be suitably reduced.

Preferably, the bearing housing is supported on the casing through damper members provided at least respectively at opposite end portions of the bearing housing spaced from each other in the axial direction, and the damper member is formed by weaving a metal wire. The damper member of this construction can be elastically deformed (contracted) as a whole, and can damp vibration three-dimensionally in all directions, and therefore achieve a high damping ability. Therefore, even when the pair of rolling bearings are located in sufficiently spaced relation to the turbine wheel, the vibration of the turbine shaft can be suitably reduced.

As described above, the pair of rolling bearings are sufficiently spaced apart from the turbine wheel, and the bearing housing is supported on the casing through the damper members each formed by weaving the metal wire, and by doing so, it is not necessary to supply a large amount of lubricating oil for cooling the pair of rolling bearings, and engine oil for damping purposes does not need to be supplied between the bearing housing and the casing. Therefore, a passage for engine oil and others does not need to be formed in the casing, and also a filter does not need to be provided in such a passage. Therefore, the casing, etc., can be simplified in structure, and the production cost can be reduced.

Preferably, the intermediate ring includes a larger-diameter ring portion, a smaller-diameter ring portion, and an inclined ring portion interconnecting the larger-diameter and smaller-diameter ring portions and disposed in inclined relation to the axial direction. In this case, preferably, the third raceway is formed at a boundary portion between the larger-diameter ring portion and the inclined ring portion, and the fourth raceway ring portion is formed at a boundary portion between the smaller-diameter ring portion and the inclined ring portion.

With this construction, the outer ring of the rolling bearing is fixed to the bearing housing against movement in the radial direction, and the inner ring is fixed to the rotation shaft such as a turbine shaft against movement in the radial direction. On the other hand, the intermediate ring is not completely prevented from movement in the axial direction and the radial direction, and is allowed to be very slightly displaced and very slightly deformed elastically in the axial and radial directions. By this action, the damper function is performed, and the vibration of the rotation shaft can be suitably reduced.

According to another aspect of the present invention, there is provided a turbocharger incorporating the above rolling bearing device, characterized in that the turbocharger comprises the casing supporting the bearing housing, a turbine shaft serving as the rotation shaft and rotatably supported by the pair of rolling bearings, a turbine wheel fixed to one axial end portion of the turbine shaft, and a compressor wheel fixed to the other axial end portion of the turbine shaft; and the middle position between the pair of rolling bearings is offset from the central portion of the bearing housing toward the compressor wheel in the axial direction.

In the present invention, even when the rolling bearings are located in sufficiently spaced relation, for example, to the turbine wheel in the turbocharger so as to reduce adverse effects of heat from the turbine wheel, the vibration of the turbine shaft (rotation shaft) can be suitably suppressed.

### BRIEF DESCRIPTION OF THE DRAWINGS

Fig. 1 is a cross-sectional view showing a turbocharger employing a preferred embodiment of a rolling bearing device of the present invention.
Fig. 2 is an enlarged cross-sectional view of the rolling bearing device.
Fig. 3 is an enlarged cross-sectional view of a rolling bearing.
Fig. 4 is a view explanatory of an intermediate ring of the invention.
Fig. 5 is an enlarged cross-sectional view of another embodiment of a rolling bearing of the invention.
Fig. 6 is a perspective view of a damper member.
Fig. 7 is an enlarged view of a portion VII of Fig. 6.

### DETAILED DESCRIPTION OF TFiE PREFERRED EMBODIMENTS

A preferred embodiment of the present invention will now be described with reference to the drawings.

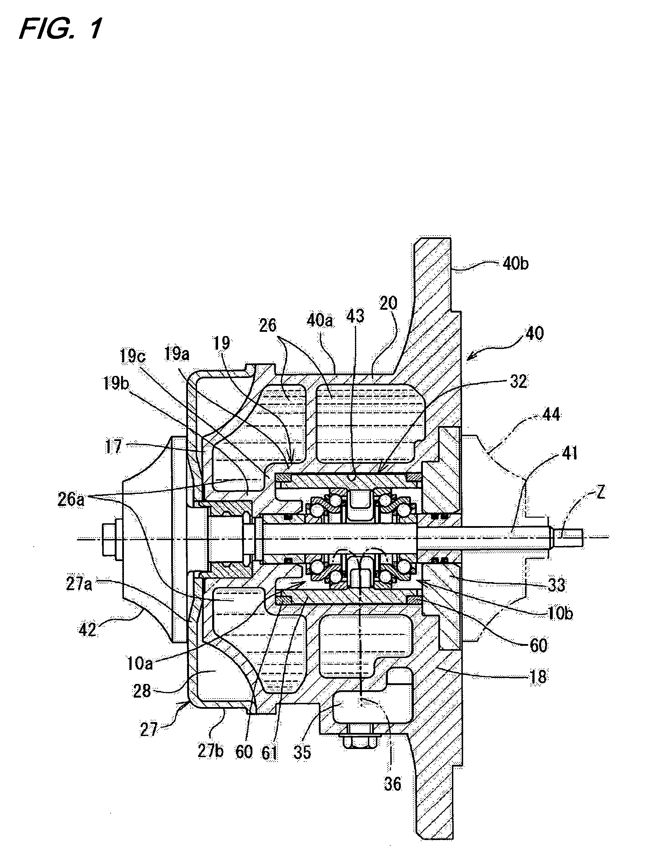

Fig. 1 is a cross-sectional view of a turbocharger employing one preferred embodiment of a rolling bearing device of the invention. This turbocharger comprises a casing 40, and a turbine shaft 41, and this turbine shaft 41 is rotatably supported in the casing 40 through the rolling bearing device 32. The turbocharger is used, for example, as a turbocharger for an engine of an automobile.

A turbine wheel 42 is fixed to one end portion of the turbine shaft 41, while a compressor wheel 44 is fixed to the other end portion of the turbine shaft 41. The turbine wheel 42 is disposed in a passageway for flowing exhaust gas (exhausted from the engine) therethrough, and the compressor wheel 44 is disposed in a passageway for supplying compressed air to the engine.

The casing 40 includes a body portion 40a having a cylindrical outer periphery, and a flange portion 40b extending radially outwardly from an end portion (in a direction of an axis Z) of the body portion 40a. The body portion 40a includes a side wall 17 formed at one end (in the direction of the axis Z) thereof, a side wall 18 formed at the other end thereof, a cylindrical outer peripheral wall 20 having a centerline (axis) coinciding with the axis Z, and a cylindrical inner peripheral wall 19 having a centerline (axis) coinciding with the axis Z.

The inner peripheral wall 19 includes a larger-diameter tubular portion 19a disposed close to the compressor wheel 44, a smaller-diameter tubular portion 19b disposed close to the turbine wheel 42, and a ring-shaped annular portion 19c interconnecting the two tubular portions 19a and 19b. The bore of the larger-diameter tubular portion 19a defines a center hole 43 of a round cross-section, and the rolling bearing device 32 is mounted within this center hole 43. That open end of the center hole 43 (in the body portion 40a) disposed close to the compressor wheel 44 is closed by a lid member 33.

A cooling water jacket 26 in which a coolant for cooling purposes is circulated is formed within the body portion 40a of the casing 40. The cooling water jacket 26 is formed over a range from the one end of the body portion 40a to the other end thereof in the direction of the axis Z. More specifically, the cooling water jacket 26 is formed as a space portion defined by the side walls 17 and 18, the outer peripheral wall 20 and the inner peripheral wall 19. The cooling water jacket 26 is disposed radially outwardly of the rolling bearing device 32, and also extends beyond the rolling bearing device 32 toward the turbine wheel 42 in the axial direction (that is, the direction of the axis Z). Particularly, the cooling water jacket 26 has an annular portion 26a disposed between the rolling bearing device 32 and the turbine wheel 42 in surrounding relation to the outer periphery of the smaller-diameter tubular portion 19b of the inner peripheral wall 19. Thanks to the provision of this annular portion 26a, heat from the turbine wheel 42 is effectively absorbed by the coolant, so that a temperature rise of the rolling bearing 32 is suppressed.

A tank portion 35 for storing lubricating oil to be supplied to the rolling bearing device 32 is formed within the body portion 40a. The tank portion 35 is formed at that portion of the body portion 40a disposed close to the compressor wheel 44. Lubricating oil within the tank portion 35 is supplied to the rolling bearing device 32 by a supply part 36. In this embodiment, the supply part 36 comprises a string (or cord) member extending between the interior of the tank portion 35 and the interior of the center hole 43. This string member 36 has such a nature and structure that lubricating oil can penetrate into the string member 36. One end portion of the string member 36 is immersed in lubricating oil within the tank portion 35, while the other end portion thereof is disposed within the rolling bearing device 32 mounted within the center hole 43. With this arrangement, lubricating oil within the tank portion 35 is supplied to the center hole 43 by a capillary action of the string member 36. With this string member 36, lubricating oil can be supplied to the rolling bearing device 32 within the center hole 43 even when the rotation of the turbine shaft 41 is stopped.

A thermal shield member 27 is provided between the turbine wheel 42 and the casing 40. The thermal shield member 27 is made of a ceramics material or metal, and includes a ring-shaped portion 27a interposed between the side wall 17 and the turbine wheel 42, and a cylindrical portion 27b extending from an outer peripheral edge of the ring-shaped portion 27a toward the casing 40. The ring-shaped portion 27a has a central hole through which a proximal end portion (turbine shaft 41) of the turbine wheel 42 passes, and a slight clearance is formed between an inner peripheral edge of this central hole and the outer periphery of the proximal end portion of the turbine wheel 42. A distal end of the cylindrical portion 27b is held in contact with an outer peripheral portion of the body portion 40a of the casing 40. With this arrangement, an annular air chamber 28 is formed between the thermal shield member 27 and the side wall 17 of the casing 40 (that is, is defined by the ring-shaped portion 27a, the cylindrical portion 27b and the side wall 17). With this construction, radiation heat and air conduction heat from the turbine wheel 42 is blocked by the thermal shield member 27, and a temperature rise of the casing 40 and the rolling bearing device 32 due to this heat can be suppressed. In addition, heat from the turbine 42 is less liable to be transferred to the casing 40 because of the provision of the air chamber 28 between the thermal shield member 27 and the casing 40, so that a temperature rise of the casing 40 and the rolling bearing device 32 can be suppressed.

Next, the rolling bearing device 32 will be described in detail.

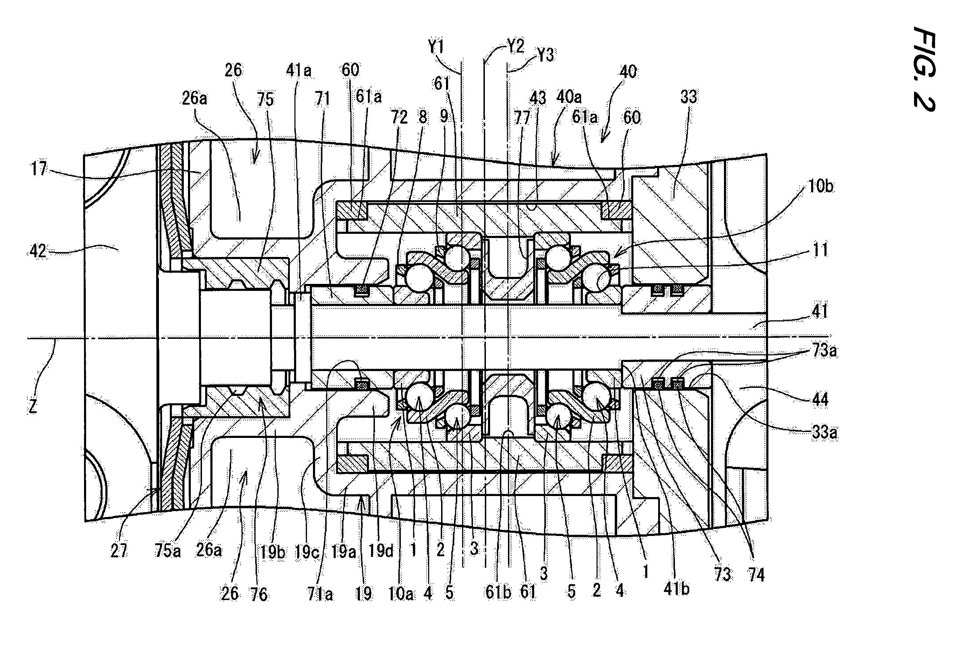

Fig. 2 is a cross-sectional view showing the rolling bearing device 32 on an enlarged scale. The rolling bearing device 32 comprises a bearing housing 61, and a pair of rolling bearings 10a and 10b provided within the bearing housing 61. The bearing housing 61 is formed into a cylindrical shape, and has an outer diameter slightly smaller than the diameter of the center hole 43 of the casing 40. Two notched recesses 61a are formed respectively in outer periphery surfaces of opposite end portions (spaced from each other in the direction of the axis Z) of the bearing housing 61 over the entire periphery thereof. Ring-like damper members 60 are fitted respectively in the notched recesses 61a. Details of this damper member 60 will hereafter be more fully described.

A cylindrical reception member 19d is formed integrally at an inner peripheral edge of the annular wall 19c of the inner peripheral wall 19, and extends toward the rolling bearing 10a in the direction of the axis Z. A cylindrical sleeve 71 fitted on the turbine shaft 41 is received in the reception member 19d such that an outer peripheral surface of the sleeve 71 is opposed to an inner peripheral surface of the reception member 19d with a close clearance formed therebetween. A peripheral groove 71a of a channel-shape is formed in the outer peripheral surface of the sleeve 71, and a seal member 72 is received in the peripheral groove 71a with a clearance formed therebetween. The seal member 72 comprises a so-called piston ring, and is fitted in the inner peripheral surface of the reception member 19d with a joint opening (formed at one portion thereof in a circumferential direction) closed, and therefore is press-contacted with this inner peripheral surface. One end face of the sleeve 71 in the direction of the axis Z abuts against a larger-diameter portion 41a formed on and projecting from the outer peripheral surface of the turbine shaft 41, while the other end face thereof abuts against an inner ring 1 of the rolling bearing 10a disposed close to the turbine wheel 42. This sleeve 71 limits the movement of the inner ring 1 relative to the turbine shaft 41 toward the turbine wheel 42.

A through hole 33a is formed through the lid member 33, and has a centerline (axis) coinciding with the axis Z. An inner peripheral surface of the through hole 33a is opposed to an outer peripheral surface of a cylindrical sleeve 73 (fitted on the turbine shaft 41) with a close clearance formed therebetween. Two peripheral grooves 73a are formed in the outer peripheral surface of the sleeve 73, and are spaced from each other in the direction of the axis Z. A seal member 74 is received in each peripheral groove 73a with a clearance formed therebetween. Like the above seal member 72, each seal member 74 comprises a piston ring, and is press-contacted with the inner peripheral surface of the through hole 33a. One end face of the sleeve 73 in the direction of the axis Z abuts against a step portion 41b (formed on the turbine shaft 41) and an inner ring 1 of the rolling bearing 10b disposed close to the compressor wheel 44, while the other end face thereof abuts against a side face of the compressor wheel 44. This sleeve 73 limits the movement of this inner ring 1 relative to the turbine shaft 41 toward the compressor wheel 44.

The seal member 72 prevents exhaust gas from leaking from the turbine wheel (42) side toward the rolling bearings 10a and 10b, and the seal members 74 prevent compressed air from leaking from the compressor wheel (44) side toward the rolling bearings 10a and 10b. Also, the seal members 72 and 74 prevent lubricating oil from flowing from the rolling bearings 10a and 10 toward the turbine wheel 42 and the compressor wheel 44.

A tubular labyrinth member 75 is fitted in the smaller-diameter tubular portion 19b of the inner peripheral wall 19 of the body portion 40a. A plurality of channel-shaped grooves 75a are formed in an inner peripheral surface of the labyrinth member 75, and this inner peripheral surface is opposed to the outer peripheral surface of the turbine shaft 41 with a clearance formed therebetween. A labyrinth seal 76 is formed by this clearance, and this labyrinth seal 76 prevents exhaust gas from flowing from the turbine wheel (42) side toward the rolling bearings 10a and 10b.

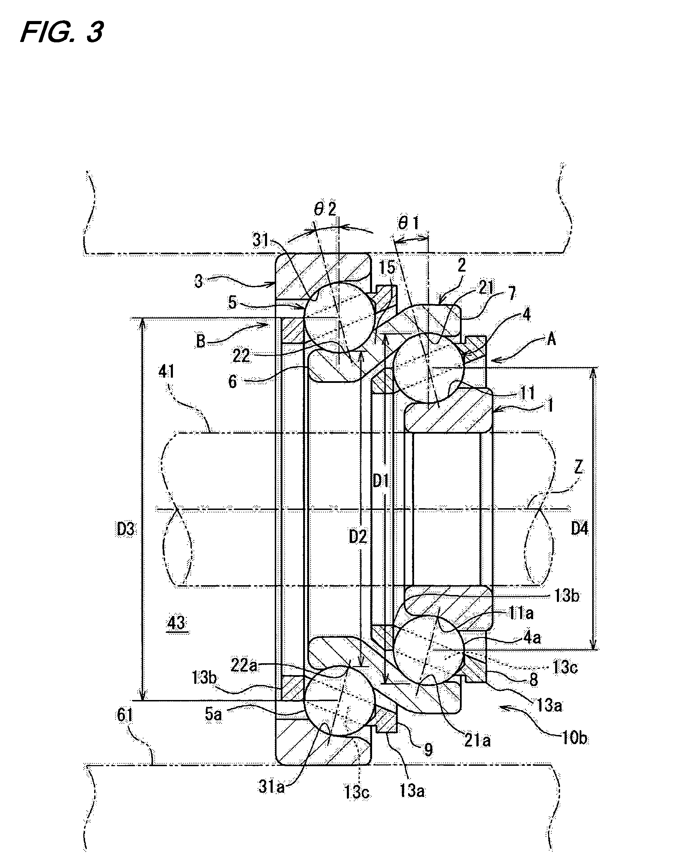

Next, the rolling bearings 10a and 10b will be described. Fig. 3 is an enlarged view of the rolling bearing 10b (the right rolling bearing in Fig. 2) disposed close to the compressor wheel 44. The rolling bearing 10b comprises the single inner ring 1 fitted on the outer peripheral surface of the turbine shaft 41, a single outer ring 3 fitted on the inner peripheral surface of the bearing housing 61, and a single intermediate ring 2 interposed between the inner ring 1 and the outer ring 3. The inner ring 1, the intermediate ring 2 and the outer ring 3 are arranged in this order in the axial direction (in the direction of the axis Z), and are offset relative to one another in the axial direction. The rolling bearing 10b further includes a row of first rolling elements 4 rollably disposed in an annular space formed between the inner ring 1 and the intermediate ring 2, and a row of second rolling elements 5 rollably disposed in an annular space formed between the intermediate ring 2 and the outer ring 3. With respect to the rolling bearing 10b, the inner ring 1 is disposed close to the compressor wheel 44, while the outer ring 3 is disposed close to the turbine wheel 42.

The first rolling elements 4 as well as the second rolling elements 5 comprise a plurality of balls, respectively. The plurality of balls 4a (the first rolling elements 4) are held on a circle (having its center disposed on the axis Z) by a cage 8, and the plurality of balls 5a (the second rolling elements 5) are held on a circle (having its center disposed on the axis Z) by a cage 9. The balls 4a and 5a have the same diameter.

The inner ring 1 has an annular shape, and its inner peripheral surface serves as a fitting surface fitted on the turbine shaft 41, and a first raceway 11 contacting the balls 4a (the first rolling elements 4) is formed on an outer peripheral surface of the inner ring 1.

The outer ring 3 has an annular shape, and its outer peripheral surface serves as a fitting surface fitted on the inner peripheral surface of the bearing housing 61, and a second raceway 31 contacting the balls 5a (the second rolling elements 5) is formed on an inner peripheral surface of the outer ring 3. An axial dimension of the inner ring 1 (in the direction of the axis Z) is generally equal to an axial dimension of the outer ring 3.

The intermediate ring 2 has an annular shape, and is larger in axial dimension (in the direction of the axis Z) than the inner ring 1 and the outer ring 3. A third raceway 21 contacting the balls 4a (the first rolling elements 4) is formed on a portion of an inner peripheral surface of the intermediate ring 2, and a fourth raceway 22 contacting the balls 5a (the second rolling elements 5) is formed on a portion of an outer peripheral surface of the intermediate ring 2. The inner ring 1, the intermediate ring 2 and the outer ring 3 having their axes coinciding with the axis Z are offset from one another in the direction of the axis Z, and are arranged in a concentric manner.

The intermediate ring 2 includes a larger-diameter ring portion 7 of an annular shape, a smaller-diameter ring portion 6 of an annular shape, and an inclined ring portion 15 of an annular shape disposed between and interconnecting the larger-diameter and smaller-diameter ring portions 7 and 6. A diameter of an outer peripheral surface of the smaller-diameter ring portion 6 is smaller than a diameter of an outer peripheral surface of the larger-diameter ring portion 7. The inclined ring portion 15 extends linearly in inclined relation to the axis Z. The larger-diameter ring portion 7 is disposed radially outwardly of the inner ring 1 with the row of first rolling elements 4 interposed therebetween. The outer ring 3 is disposed radially outwardly of the smaller-diameter ring portion 6 with the row of second rolling elements 5 interposed therebetween.

The annular third raceway 21 is formed at a boundary portion between the inner peripheral surface of the larger-diameter ring portion 7 and the inner peripheral surface of the inclined ring portion 15, and the annular fourth raceway 22 of an annular shape is formed at a boundary portion between the outer peripheral surface of the smaller-diameter ring portion 6 and the outer peripheral surface of the inclined ring portion 15. The intermediate ring 2 has a bent shape in its longitudinal cross-section.

A diameter D3 of a pitch circle of the second rolling elements 5 contacting the fourth raceway 22 is larger than a diameter D4 of a pitch circle of the first rolling elements 4 contacting the third raceway 21. Therefore, the row of first rolling elements 4 and the row of second rolling elements 5 can be arranged close to each other in the direction of the axis Z with the inclined ring portion 15 of the intermediate ring 2 interposed therebetween, and the axial dimension of the rolling bearing 10b (in the direction of the axis Z) can be reduced. The diameter of the pitch circle means a diameter of a circle passing through the centers of the row of balls.

The balls 4a (the first rolling elements 4) are disposed in angular contact with the pair of opposed first and third raceways 11 and 21, and the balls 5a (the second rolling elements 5) are disposed in angular contact with the pair of opposed fourth and second raceways 22 and 31. Contact angles θ1 and θ2 for the first and second rolling elements are equal to each other, and for example are 15° in the drawings. Therefore, this rolling bearing 10b can receive a load (an axial load) in the direction of the axis Z. Furthermore, this rolling bearing 10b is formed into the axial arrangement extending in the direction of the axis Z, and therefore has an axial-damper function.

The intermediate ring 2 is formed into such a structure that the rolling elements 4 and 5 can be suitably disposed in angular contact with this intermediate ring 2. Namely, the fourth raceway 22 is formed on the outer periphery of the intermediate ring 2 at the boundary portion between the smaller-diameter ring portion 6 and the inclined ring portion 15, and therefore with respect to shoulder portions disposed respectively at opposite sides of the fourth raceway 22, a diameter of the shoulder portion of the inclined ring portion 15 is larger than a diameter of the shoulder portion of the smaller-diameter ring portion 6. Therefore, the fourth raceway 22 can be formed into the angular contact raceway, utilizing the inclination of the inclined ring portion 15. Also, the third raceway 21 is formed at the boundary portion between the larger-diameter ring portion 7 and the inclined ring portion 15, and therefore with respect to shoulder portions disposed respectively at opposite sides of the third raceway 21, a diameter of the shoulder portion of the inclined ring portion 15 is smaller than a diameter of the shoulder portion of the larger-diameter ring portion 7. Therefore, the third raceway 21 can be formed into the angular contact raceway, utilizing the inclination of the inclined ring portion 15.

Thus, the inner ring 1 and the outer ring 3 need to be thickened at their one shoulder portions so that the row of rolling elements 4 and the row of rolling elements 5 can be disposed in angular contact with the inner ring 1 and the outer ring 3, respectively. However, the intermediate ring 2 does not need to be thickened at one shoulder portion (the inclined ring portion 5) so as to achieve the angular contact of the rolling elements 4 and 5. Therefore, the intermediate ring 2 can be simplified in structure, and can be easily produced by plastically deforming a cylindrical member having a peripheral wall with a uniform thickness.

In this intermediate ring 2, the smaller-diameter ring portion 6 is smaller in diameter than the larger-diameter ring portion 7 as described above, and a raceway diameter D2 of the fourth raceway 22 of the smaller-diameter ring portion 6 is smaller than a raceway diameter D1 of the third raceway 21 of the larger-diameter ring portion 7 (D2 < D1). The raceway diameter D2 of the fourth raceway 22 is a diameter of the smallest-diameter portion of the raceway 22, and the raceway diameter D1 of the third raceway 21 is a diameter of the largest-diameter portion of the raceway 21.

In the rolling bearing 10b, the row of balls 4a (the first rolling elements 4) are rollably interposed between the pair of opposed first and third raceways 11 and 21 of the inner and intermediate rings 1 and 2, and the row of balls 5a (the second rolling elements 5) are rollably interposed between the pair of opposed second and fourth raceways 31 and 22 of the outer and intermediate rings 3 and 2. This rolling bearing 10b has the plurality of rows (two stages) of rolling elements 4 and 5 disposed between the inner ring 1 (fitted on the turbine shaft 41) and the outer ring 3 fixed to the bearing housing 61. Namely, this rolling bearing 10b comprises a first bearing portion A formed by the inner ring 1, the first rolling elements 4 and the intermediate ring 2 serving as an outer ring, and a second bearing portion B formed by the intermediate ring 2 serving as an inner ring, the second rolling elements 5 and the outer ring 3.

Like the right rolling bearing 10b disposed close to the compressor wheel 44, the left rolling bearing 10a disposed close to the turbine wheel 42 comprises the inner ring 1, an outer ring 3, an intermediate ring 2, a row of first rolling elements 4, a row of second rolling elements 5, and cages 8 and 9 as shown in Fig. 2. However, in the left rolling bearing 10a, the inner ring 1 is disposed close to the turbine wheel 42, while the outer ring 3 is disposed close to the compressor wheel 44, and the left rolling bearing 10a and the right rolling bearing 10b are arranged in back-to-back relation.

An annular ridge 61b is formed on and projects slightly radially inwardly from the inner peripheral surface of the bearing housing 61, and the outer rings 3 of the pair of rolling bearings 10a and 10b abut respectively against opposite end faces of the ridge 61b facing away from each other in the direction of the axis Z, and therefore are prevented from further moving toward each other. A spring member 77 is interposed between the pair of rolling bearings 10a and 10b, and by this spring member 77, a preload is applied to the pair of rolling bearings 10a and 10 to urge them away from each other in the direction of the axis Z.

In each rolling bearing 10a, 10b of the above construction, when the turbine shaft 41 is rotated at a predetermined number of revolutions, the inner ring 1 of the rolling bearing 10a, 10b is rotated at this predetermined number of revolutions relative to the outer ring 3. In this rotating condition, this predetermine number of revolutions is distributed to the first and second bearing portions A and B (Fig. 3) arranged in the two stages. Namely, although the inner ring 1 rotates together with the turbine shaft 41, the intermediate ring 2 rotates at a speed lower than the speed of rotation of the inner ring 1 (that is, in a decelerated condition) in accordance with the rotation of the inner ring 1. Therefore, the number of revolutions at the bearing portion of each stage is smaller than the above predetermined number of revolutions. For example, when the turbine shaft 41 is rotated, for example, at 200,000 r.p.m, the first (inner) bearing portion A close to the turbine shaft 41 rotates at 160,000 r.p.m., while the second (outer) bearing portion B close to the casing 40 rotates at 40,000 r.p.m., which is lower than that of the first bearing portion A. The rotational speeds distributed respectively to the bearing portions A and B arranged in the multi-stages are automatically changed in accordance with the rotational speed of the turbine shaft 41. At this time, the second bearing portion B including the outer ring 3 is rotated at a speed lower than that of the first bearing portion A including the inner ring 1, and the rotational speed is distributed to the bearing portions A and B in a predetermined ratio.

With this construction, the limiting speed of the rolling bearings 10a and 10b can be increased as a whole, and therefore these rolling bearings can support the rotating turbine shaft 41 with a high safety factor, and can stably support the turbine shaft 41 even when it is rotated at high speed.

As described above, in the intermediate ring 2 of the rolling bearing 10 (10a, 10b), the fourth raceway 22 is formed on the outer peripheral surface of the boundary portion between the smaller-diameter ring portion 6 (smaller in diameter than the larger-diameter ring portion 7) and the inclined ring portion 15. With this construction, the second rolling elements 5 (contacting the fourth raceway 22 formed at the boundary portion between the smaller-diameter ring portion 6 and the inclined ring portion 15) are disposed at the radially-inward position, and therefore the radial dimension of the rolling bearing 10 can be reduced. Namely, the diameter of the outer peripheral surface of the outer ring 3 can be reduced. Therefore, the outer and inner diameters of the bearing housing 61 (which receives the rolling bearings 10a and 10b therein) as well as the inner diameter of the center hole 43 of the casing 40 can be reduced (see Fig. 2). As a result, the capacity of the cooling water jacket 26 and the capacity of the tank portion 35 can be increased as much as possible without increasing the size of the casing 40.

In the intermediate ring 2 of the rolling bearing 10a, 10b, the third raceway 21 is formed on the inner peripheral surface of the boundary portion between the larger-diameter ring portion 7 and the inclined ring portion 15, and the fourth raceway 22 is formed on the outer peripheral surface of the boundary portion between the smaller-diameter ring portion 6 and the inclined ring portion 15, as shown in Fig. 3. Therefore, the axial dimension of the rolling bearing 10a, 10b in the direction of the axis Z can be reduced.

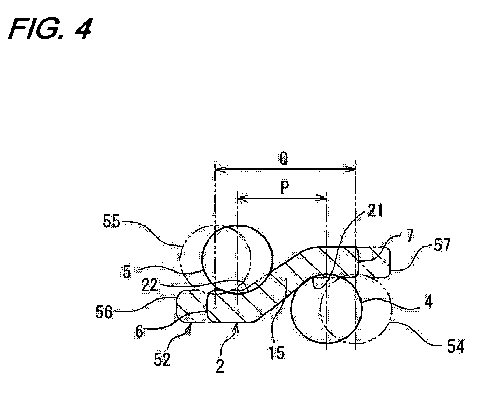

For example, in a comparative example shown in Fig. 4, in which a raceway is formed only on an inner periphery of a larger-diameter ring portion 57 of an intermediate ring 52 indicated in dots-and-dash lines, and also a raceway is formed only on an outer periphery of a smaller-diameter ring portion 56, the distance Q between a median plane of a row of rolling elements 54 (contacting the raceway on the larger-diameter ring portion 57) and a median plane of a row of rolling elements 55 (contacting the raceway on the smaller-diameter ring portion 56) in the direction of the axis Z is increased, and the overall axial length of the rolling bearing in the direction of the axis Z is increased. In the present invention, however, part of the third raceway 21 and part of the fourth raceway 22 are formed respectively on the inner and outer peripheral surfaces of the inclined ring portion 15 as indicated in solid lines, and therefore the distance P between a median plane of the row of rolling elements 4 (contacting the third raceway 21) and a median plane of the row of rolling elements 5 (contacting the fourth raceway 22) in the direction of the axis Z can be made smaller than the distance Q of the above comparative example (P < Q). Namely, the row of rolling elements 4 and the row of rolling elements 5 can be disposed closer to each other in the direction of the axis Z, and therefore the axial dimension of the rolling bearing 10a, 10b in the direction of the axis Z can be reduced.

Furthermore, the third raceway 21 is formed on part of the inner peripheral surface of the inclined ring portion 15, and the fourth raceway 22 is formed on part of the outer peripheral surface of the inclined ring portion 15. The pitch circle diameter D3 of the second rolling elements 5 contacting the fourth raceway 22 is larger than the pitch circle diameter D4 of the first rolling elements 4 contacting the third raceway 21, and the row of first rolling elements 4 and the row of second rolling elements 5 can be disposed close to each other in the direction of the axis Z. Therefore, the dimension of the rolling bearing 10a, 10b in the direction of the axis Z can be reduced.

With this arrangement, a space for receiving the rolling bearing 10a, 10b can be reduced in the direction of the axis Z, and other parts can be easily provided adjacent to the rolling bearing.

Furthermore, in the intermediate ring 2, a raceway surface 22a of the fourth raceway 22 is disposed radially inwardly of a raceway surface 21a of the third raceway 21, and therefore the row of rolling elements 5 contacting the fourth raceway 22 are disposed more radially inwardly (that is, closer to the axis Z in the radial direction), and therefore the radial dimension of the rolling bearing can be further reduced.

The intermediate ring 2 is supported by the inner ring 1 and the outer ring 3 through the first rolling elements 4 and the second rolling elements 5, and the third raceway 21 on which the first rolling elements 4 roll is formed at the boundary portion between the larger-diameter ring portion 7 and the inclined ring portion 15 of the intermediate ring 2, and the fourth raceway 22 on which the second rolling elements 5 roll is formed at the boundary portion between the smaller-diameter ring portion 6 and the inclined ring portion 15, and the first rolling elements 4 and the second rolling elements 5 are disposed in angular contact with the corresponding raceways. With this construction, a bearing clearance between the inner ring 1 and the intermediate ring 2 (that is, a bearing clearance at the first bearing portion A) and a bearing clearance between the outer ring 3 and the intermediate ring 2 (that is, a bearing clearance at the second bearing portion B) are automatically adjusted respectively to proper values in accordance with the number of revolutions and a load acting on the bearing.

In an assembled condition of the rolling bearing 10a, 10b, although the inner ring 1 and the outer ring 3 are fixed relative to the rotation shaft (turbine shaft) 41 and the casing 40 against movement in the radial direction, the intermediate ring 2 is not completely prevented from movement in the axial direction (the direction of the axis Z) and the radial direction, and can be very slightly displaced and very slightly deformed elastically in the axial and radial directions in accordance with the number of the revolutions and a load applied to the intermediate ring 2. Therefore, the bearing clearance at the first bearing portion A and the bearing clearance at the second bearing portion B are automatically adjusted respectively to proper values in accordance with the number of revolutions and the applied load.

Furthermore, the intermediate ring 2 can receive a load from the first rolling elements 4 through the third raceway 21, and also can receive a load from the second rolling elements 5 through the fourth raceway 22 (which is offset from the third raceway 21 in the direction of the axis Z), and this intermediate ring 2 can be very slightly displaced and very slightly deformed elastically as described above, and therefore the intermediate ring 2 has a damping action (like a leaf spring), and can achieve an excellent vibration-suppressing effect for damping vibration developing in the rolling bearing 10a, 10b. More specifically, the third raceway 21 is formed at the boundary portion between the larger-diameter ring portion 7 and the inclined ring portion 15 of the intermediate ring 2, and the fourth raceway 22 is formed at the boundary portion between the smaller-diameter ring portion 6 and the inclined ring portion 15, and the row of first rolling elements 4 and the row of second rolling elements 5 are disposed in angular contact with the corresponding raceways. Therefore, the intermediate ring 2 can be very slightly displaced and very slightly deformed elastically in the axial direction (direction of the axis Z) and radial direction, and thus can achieve the excellent vibration-suppressing effect both in the axial and radial directions.

Thus, when the intermediate ring 2 receives loads from the first and second rolling elements 4 and 5, particularly the boundary portion between the larger-diameter ring portion 7 and the inclined ring portion 15 of the intermediate portion 2 and the boundary portion between the smaller-diameter ring portion 6 and the inclined ring portion 15 can be very slightly displaced or very slightly deformed elastically in the axial and radial directions. Namely, the intermediate ring 2 serves as a leaf spring. More specifically, the intermediate ring 2 has a damper function portion which can be very slightly displaced or very slightly deformed elastically so as to damp vibration developing during rotation. In this embodiment, the damper function portion comprises these boundary portions.

As shown in Fig. 3, each of the cages 8 and 9 is annular, and is slanting (in its cross-section) from one end thereof to the other end thereof in the direction of the axis Z. Namely, the cage 8, 9 includes a larger-diameter portion 13a, a smaller-diameter portion 13b, and a slanting portion 13c interconnecting the larger-diameter and smaller-diameter portions 13a and 13b in the direction of the axis Z, and the cage is inclined like the inclined ring portion 15 of the intermediate ring 2. With this construction, When the balls 4a, 5a roll, the cage 8, 9 stirs the air around each ball 4a, 5a, thereby enhancing a cooling effect.

Next, the arrangement of the bearing housing 61, the rolling bearings l0a and 10b, the turbine wheel 42 and the compressor wheel 44 will be described in detail.

As shown in Fig. 2, the bearing housing 61 is disposed generally midway between the turbine wheel 42 and the compressor wheel 44. More specifically, a central portion Y2 of the bearing housing 61 in the direction of the axis Z is slightly offset toward the compressor wheel 44 from a middle position Y1 between the turbine wheel 42 and the compressor wheel 44 in the direction of the axis Z. A middle position Y3 between the pair of rolling bearings 10a and 10b in the direction of the axis Z is offset from the central portion Y2 of the bearing housing 61 toward the compressor wheel 44. Therefore, the pair of rolling bearings 10a and 10b are sufficiently spaced apart from the turbine wheel 42, that is, disposed remoter from the turbine wheel 42, and hence are disposed closer to the compressor wheel 44.

The rolling bearing 10a disposed close to the turbine wheel 42 is located on the middle position Y1 between the turbine wheel 42 and the compressor wheel 44. Furthermore, the middle position Y3 between the pair of rolling bearings 10a and 10b is offset toward the compressor wheel 44 from the central portion Y2 of the bearing housing 61 as described above, and therefore the bearing housing 61 extends considerably beyond the pair of rolling bearings 10a and 10b toward the turbine wheel 41.

Thus, the pair of rolling bearings 10a and 10b are sufficiently spaced apart from the turbine wheel 42, and therefore heat is less liable to be transferred from the turbine wheel (42) side to the rolling bearings 10a and 10b. Therefore, it is not necessary to supply a large amount of lubricating oil for cooling the rolling bearings 10a and 10b. Namely, as in this embodiment, there can be provided the arrangement in which the tank portion 35 (Fig. 1) is provided within the casing 40, and lubricating oil within this tank portion 35 is supplied little by little. Therefore, many passages for supplying engine oil or the like to the rolling bearings as in the conventional structure do not need to be provided, and also any filter for engine oil does not need to be provided in the passage, and therefore the structure of the casing 40 can be simplified, and the production cost can be reduced.

Furthermore, such passages for engine oil do not need to be provided in the casing 40, and accordingly the overall size or capacity of the cooling water jacket 26 can be increased. Therefore, the overall efficiency of cooling of the rolling device 32 can be enhanced.

On the other hand, in this case (that is, in the case where the pair of rolling bearings 10a and 10b are sufficiently spaced apart from the turbine wheel 42), there is a possibility that the support balance between the turbine wheel 42 and the compressor wheel 44 is destroyed, so that vibration of the turbine shaft 41 becomes large. In this embodiment, however, each of the rolling bearings 10a and 10b includes the intermediate ring 2 provided between the inner and outer rings 1 and 3, and this intermediate ring 2 has the damper function as described above, and therefore vibration of the turbine shaft 41 can be suitably reduced.

Furthermore, the bearing housing 61 extends considerably beyond,the pair of rolling bearings 10a and 10b toward the turbine wheel 42, and therefore the degree of destroying of the support balance between the turbine wheel 42 and the compressor wheel 44 due to the spacing of the pair of rolling bearings 10a and 10b apart from the turbine wheel 42 can be decreased, so that the vibration of the turbine shaft 41 can be reduced.

Furthermore, in this embodiment, the vibration of the turbine shaft 41 is further reduced by the damper members 60 hereafter described in detail.

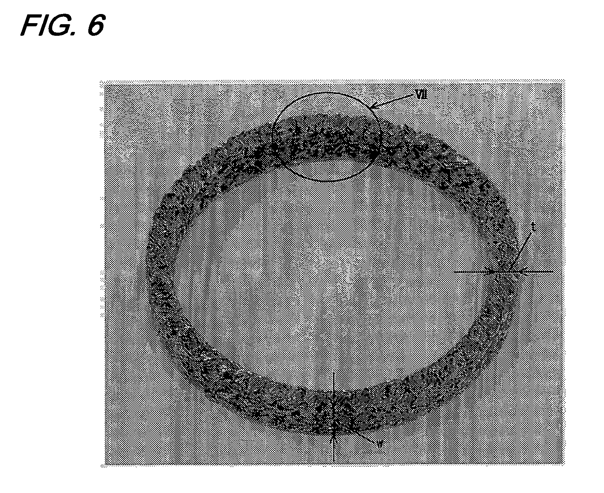

Next, the damper member 60 will be described in detail. Fig. 6 is a perspective view of the damper member 60. The damper member 60 is formed into a ring-shape, and has a generally square cross-section, and has a width w and a thickness t. As shown in Fig. 2, the damper members 60 are fitted respectively in the two notched recesses 61a formed respectively in the outer peripheral surfaces of the opposite end portions of the bearing housing 61. The left damper member 60 abuts against the inner peripheral surface of the center hole 43 and the side face of the annular portion 19c, while the right damper member 60 abuts against the inner peripheral surface of the center hole 43 and the side face of the lid member 33.

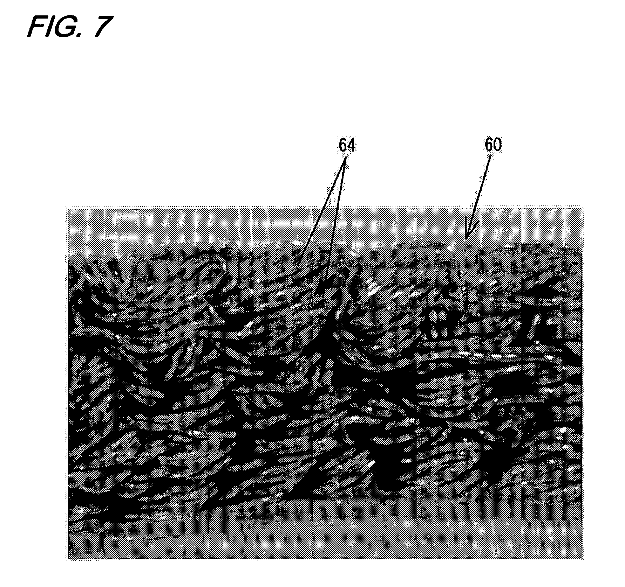

Fig. 7 is an enlarged view of a portion vII of Fig. 6. The damper member 60 is formed using a metal wire such as a stainless steel. More specifically, one or more metal wires 64, while bent in a complicated manner, are woven three-dimensionally (that is, the wires 64 are gathered, twisted together, mingled and/or intertwined) into the ring-shape having the generally square cross-section as a whole.

Interstices (voids) are formed generally entirely or partially between the metal wires 64 forming the damper member 60), and the wires 64 can be elastically deformed within the range of the interstices, and also the adjacent wires 64 can be displaced relative to each other in their longitudinal direction, so that the damper member 60 can be elastically deformed (contracted) as a whole in the radial direction (the upward-downward direction in Fig. 2, a direction perpendicular to the sheet of Fig. 2, etc.) and the axial direction (the direction of the axis Z). The damper member 60 has an outer diameter slightly larger than the inner diameter of the center hole 43, and is mounted between the bearing housing 61 and the inner peripheral surface of the center hole 43 such that the damper member 60 is compressed in the radial direction with a predetermined interference. Each damper member 60 projects outwardly beyond the corresponding end of the bearing housing 61 in the direction of the axis Z, and the left damper member 60 is held between the bearing housing 61 and the annular portion 19c such that it is compressed in the direction of the axis Z with a predetermined interference, while the right damper member 60 is held between the bearing housing 61 and the lid member 33 such that it is compressed in the direction of the axis Z with a predetermined interference.

A lubricant is filled in the interstices between the wires 64 of the damper member 60. For example, fluorine-type grease can be used as this lubricant. For example, one having an outer diameter of 0.4 mm is used as the metal wire 64. The ratio (void ratio) of the interstices (voids) to the total volume of the damper member 60 can be set, for example, to 60%.

Next, a method of producing the damper member 60 will be described. First, there is formed an intermediate product which is slightly larger in outer diameter, thickness t and width w and is slightly smaller in inner diameter than a final product. For forming this intermediate product, metal wires 64 are loosely woven such that the void ratio of this intermediate product is larger than that (for example, 60%) of the final product. Then, this intermediate product is compressed, using a mold, thereby reducing the interstices between the wires 64, and by doing so, the final product having the desired dimensions and void ratio is produced.

In the above construction, vibration transmitted from the turbine shaft 41 to the bearing housing 61 via the rolling bearings 10a and 10b is further transmitted to the casing 40 while being damped by the damper members 60. At this time, the damper members 60 can be elastically deformed in the radial direction and the axial direction (the direction of the axis Z), and therefore can damp the vibration three-dimensionally in all directions, thus achieving a high damping ability.

In addition, utilizing not only the elastic deformation of the metal wires 64 themselves but also friction produced by the woven structure of the wires 64, the intertwined condition of the wires 64, etc., each damper member 60 can receive vibrational energy in all directions to damp this energy while exhibiting a more excellent performance than a mere viscoelastic ability.

Therefore, even when the pair of rolling bearings 10a and 10b are sufficiently spaced apart from the turbine wheel 42 as described above, vibration due to the rotation of the turbine shaft 41 can be suitably reduced.

The damper member 60 is formed into the predetermined shape, using the metal wires 64, and therefore has a high thermal resistance. Therefore, the damper member 60 is suited for use as damper means in a turbocharger in which a very high temperature develops. Particularly when the bearing housing 61 extends considerably beyond the pair of rolling bearings 10a and 10b toward the turbine wheel 42 as in this embodiment, the damper member 60 disposed close to the turbine wheel 42 is exposed to high temperature. Despite this, the damping ability of this damper member 60 is hardly lowered under the influence of this heat.

In addition, the grease is filled in the interstices between the wires 64 of the damper member 60, and therefore the wires 64 are hardly worn when they rub together upon elastic deformation.

In this embodiment, the damper members 60 each comprising the metal wires 64 are provided between the bearing housing 61 and the casing 40, and therefore the use of an oil film damper as in a conventional structure is not necessary. Therefore, it is not necessary to use an engine oil pump for supplying engine oil into the interior of the casing 40, and therefore the efficiency of the engine can be enhanced as compared with the conventional structure. And besides, since engine oil is not used for damping the vibration of the turbine shaft 41, the damping performance or ability can be maintained for a long period of time without being affected by deterioration of the engine oil. Furthermore, the amount of engine oil to be consumed can be reduced.

Any passage for supplying engine oil to an oil film damper as in the conventional structure does not need to be provided in the casing 40, and therefore the structure of the casing 40 canbe simplified, and the cost canbe reduced. Furthermore, engine oil is not used for lubricating the rolling bearings 10a and 10b, and instead lubricating oil stored in the tank portion 35 is used for this purpose. Therefore, any engine oil passage for lubricating the bearings and any engine oil passage for damping purposes are both unnecessary. Therefore, the structure of the casing 40 can be further simplified, and the production cost can be further reduced.

An elastic modulus (spring constant) of the damper member 60 can be freely changed by suitably selecting the void ratio, the weaving direction, the outer diameter of the wire 64, etc. Also, the elastic modulus can be varied depending on the direction (the radial direction and the axial direction) of elastic deformation. Therefore, the damper member 60 having desired damping characteristics can be easily produced. Furthermore, the shape (the outer diameter, the inner diameter, the width w, the thickness t, the cross-sectional shape, etc.) of the damper member 60 can be freely designed, and therefore the degree of freedom of design of the turbocharger is increased, and the optimum turbocharger can be produced.

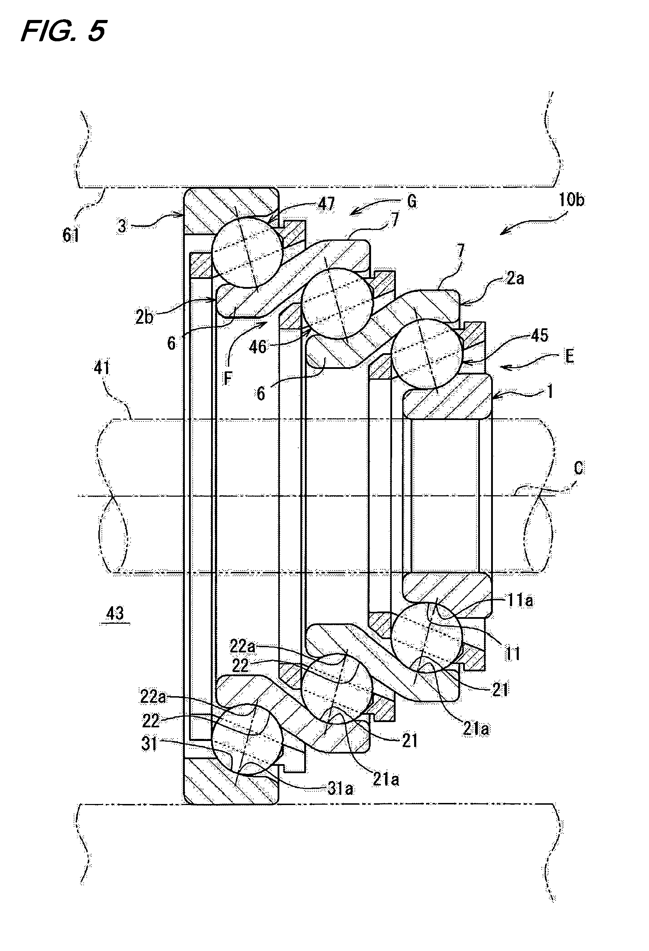

Fig. 5 is a cross-sectional view of another embodiment of a rolling bearing of the invention. Fig. 5 shows only the right rolling bearing 10b. In each rolling bearing 10a, 10b of the above embodiment, at least one intermediate ring 2 is interposed between the inner and outer rings 1 and 3, and the row of rolling elements are rollably interposed between the opposed raceways of the inner and intermediate rings 1 and 2, and also the row of rolling elements are rollably interposed between the intermediate and outer rings 2 and 3. However, in the rolling bearing 10b shown in Fig. 5, two intermediate rings 2a and 2b are interposed between inner and outer rings 1 and 3. In this embodiment, the inner ring 1, the first intermediate ring 2a, the second intermediate ring 2b and the outer ring 3 are arranged in this order in the direction of the axis Z, and are offset from one anther in the direction of the axis Z. A row of first rolling elements 45 are rollably provided in an annular space formed between the inner ring 1 and the first intermediate ring 2a, and a row of second rolling elements 46 are rollably provided in an annular space formed between the first intermediate ring 2a and the second intermediate ring 2b, and a row of third rolling elements 47 are rollably provided in an annular space formed between the second intermediate ring 2b and the outer ring 3.

The intermediate rings 2a and 2b are identical in construction to the intermediate ring 2 of the above embodiment, and each of the intermediate rings 2a and 2b includes a larger-diameter ring portion 7 of an annular shape, a smaller-diameter ring portion 6 of an annular shape, and an inclined ring portion 15 of an annular shape disposed between and interconnecting the larger-diameter and smaller-diameter ring portions 7 and 6. In each of the intermediate rings 2a and 2b, a third raceway 21 is formed at a boundary portion between an inner peripheral surface of the larger-diameter ring portion 7 and an inner peripheral surface of the inclined ring portion 15, and a fourth raceway 22 is formed at a boundary portion between an outer peripheral surface of the smaller-diameter ring portion 6 and an outer peripheral surface of the inclined ring portion 15.

This rolling bearing 10b includes the three rows of rolling elements 45, 46 and 47 arranged in three stages between the inner ring 1 (fitted on the turbine shaft 41) and the outer ring 3 fixed to the casing 40. Namely, this rolling bearing comprises a first bearing portion E formed by the inner ring 1, the first rolling elements 45, and the first intermediate ring 2a serving as an outer ring, a second bearing portion F formed by the first intermediate ring 2a serving as an inner ring, the second rolling elements 46 and the second intermediate ring 2b serving as an outer ring, and a third bearing portion G formed by the second intermediate ring 2b serving as an inner ring, the third rolling elements 47 and the outer ring 3. With this construction, the overall number of revolutions of the rolling bearing 10b is distributed to the bearing portions E, F and G, and the rolling bearing 10b well suited for a higher-speed operation can be obtained.

In this embodiment, also, as in the above embodiment (Fig. 3), a bearing clearance at each of the first, second and third bearing portions E, F and G (which are formed with the use of the first and second intermediate rings 2a and 2b) is automatically adjusted to its proper value in accordance with the number of revolutions and a load acting on the bearing. Furthermore, the first intermediate ring 2a and the second intermediate ring 2b have a damping action (like a leaf spring), and can achieve an excellent vibration-suppressing effect.

The component parts of each rolling bearing 10a, 10b of the invention can be made of known materials, and particularly when the balls (rolling elements) and the intermediate ring (or rings) are made of a lightweight ceramics material, the rolling bearing can suitably support the shaft rotating at high speed.

The present invention is not limited to the above embodiments, and suitable modifications can be made. For example, each of the rolling bearings 10a and 10b of the rolling bearing device 32 may include three or more intermediate rings. Furthermore, the inner ring 1 may be fixed against rotation, in which case the outer ring 3 is rotated.

The material and outer diameter of the metal wire 64 forming the damper member 60, the void ratio of the damper member 60, etc., can be suitably changed. Furthermore, in the above embodiments, although the damper member 60 is formed into the ring-shape, and is fitted in the recess formed in the outer periphery of the bearing housing (bearing support member) 61, the damper member 60 can be divided into sections of an arc-shape or a block-shape in the circumferential direction. Furthermore, the damper member 60 can have a circular cross-section or a polygonal cross-section other than a square cross-section. Furthermore, although the damper members 60 are provided respectively at the opposite end portions of the bearing housing 61 spaced from each other in the direction of the axis Z, such damper members can be provided over the entire length of the bearing housing 61 in the direction of the axis Z.

In the above embodiments, although the rolling bearing device 32 of the present invention is applied to the turbocharger, it can be applied also to any other suitable turbocharger or apparatus having a rotation shaft.

## Claims

1. A rolling bearing device comprising:
a bearing housing adapted to be supported on a casing of an apparatus having a rotation shaft; and
a pair of rolling bearings adapted to be mounted within the bearing housing to rotatably support the rotation shaft;
wherein a middle position between said pair of rolling bearings in an axial direction and a central portion of said bearing housing in the axial direction are offset from each other in the axial direction; and
each of said rolling bearings includes an inner ring having a first raceway formed at an outer periphery thereof, an outer ring having a second raceway formed at an inner periphery thereof, and at least one intermediate ring which is interposed between said inner and outer rings, and has a third raceway formed at an inner periphery thereof and also has a fourth raceway formed at an outer periphery thereof, a row of rolling elements rollably interposed between said third raceway of said intermediate ring and said first raceway of said inner ring, and a row of rolling elements rollably interposed between said fourth raceway of said intermediate ring and said second raceway of said outer ring; and
said intermediate ring has a damper function to be very slightly displaced or very slightly deformed elastically so as to damp vibration produced during rotation of said rotation shaft.

2. A rolling bearing device according to claim 1, wherein said bearing housing is supported on said casing through damper members provided at least respectively at opposite end portions of said bearing housing spaced from each other in the axial direction, and said damper member is formed by weaving a metal wire.

3. A rolling bearing device according to claim 1, wherein said intermediate ring includes a larger-diameter ring portion, a smaller-diameter ring portion, and an inclined ring portion interconnecting said larger-diameter and smaller-diameter ring portions and disposed in inclined relation to said axial direction; and
said third raceway is formed at a boundary portion between said larger-diameter ring portion and said inclined ring portion, and said fourth raceway ring portion is formed at a boundary portion between said smaller-diameter ring portion and said inclined ring portion.

4. A turbocharger incorporating a rolling bearing device as defined in claim 1, wherein said turbocharger comprises said casing supporting said bearing housing, a turbine shaft serving as said rotation shaft and rotatably supported by said pair of rolling bearings, a turbine wheel fixed to one axial end portion of said turbine shaft, and a compressor wheel fixed to the other axial end portion of said turbine shaft; and
the middle position between said pair of rolling bearings is offset from the central portion of said bearing housing toward said compressor wheel in the axial direction.
